# EUROPÄISCHE PATENTSCHRIFT

(11) **EP 3 208 052 B1**
(45) Veröffentlichungstag und Bekanntmachung des Hinweises auf die Patenterteilung: **12.09.2018**
(21) Anmeldenummer: 17155399.3
(22) Anmeldetag: 09.02.2017
(51) Int. Cl.: B25J 9/12, B25J 19/00, H02K 7/102

(54) **ROBOTERGELENKANTRIEB MIT FESTSTELLBREMSE**
ROBOT JOINT DRIVE WITH PARKING BRAKE
ENTRAÎNEMENT D'ARTICULATION DE ROBOT COMPRENANT UN FREIN D'ARRÊT

(30) Priorität: 22.02.2016 DE 202016001163 U
(43) Veröffentlichungstag der Anmeldung: 23.08.2017
(73) Patentinhaber: Lakeview Innovation Ltd., 6374 Buochs (CH)
(72) Erfinder: LUSSMANN, Mario, 6064 Kerns (CH); BOLETIS, Alexis, 6005 Luzern (CH); TEIMEL, Arnold, 6064 Giswil (CH); RISSLER, Alexander, 79350 Sexau (DE); SCHULZE Dr., Jens, CH - 6074 Giswil (CH)
(74) Vertreter: Grünecker Patent- und Rechtsanwälte PartG mbB

(56) Entgegenhaltungen:
- WO-A1-2015/185748
- GB-A- 2 358 896
- JP-A- 2003 011 079
- JP-A- 2007 006 590
- JP-B2- H0 763 906

## Beschreibung

Die Erfindung betrifft einen Robotergelenkantrieb mit einem stationären Gehäuse, einem relativ zum stationären Gehäuse drehbarem Abtriebsteil, einen Elektroantriebsmotor zum Bewegen des Abtriebsteils und einer Feststellbremse für den Rotor des Elektroantriebsmotors, wobei die Feststellbremse einen den Elektroantriebsmotor bereichsweise umgreifenden Hebelarm, eine Vorspanneinrichtung zum Vorspannen des Hebelarms in Richtung des Elektroantriebsmotors und einen Aktuator zum Ablösen des Hebelarms von dem Elektroantriebsmotor umfasst. Des Weiteren betrifft die Erfindung einen Roboter, insbesondere einen Humanoid-Roboter, mit einem solchen Robotergelenkantrieb.

Robotergelenkantriebe werden bereits in großer Stückzahl in automatisierten Fertigungen in der Industrie und der Medizintechnik, aber auch für Humanoid-Roboter, Industrie-Roboter und bei Robotik-Anwendungen in der Raumfahrt genutzt. Sowohl bei automatisierten Fertigungsanlagen als auch bei Humanoid-Robotern werden eine Vielzahl von Verbindungen zwischen einzelnen Komponenten benötigt, die unterschiedliche Formen aufweisen und verschiedene Bewegungen ermöglichen. Insbesondere bei Humanoid-Robotern, die das Verhalten und Bewegungen von Menschen reproduzieren, sind Verbindungen mit mehreren Freiheitsgraden notwendig. Die Bewegungen dieser Verbindungen werden mittels eines elektrischen Antriebsmotors durchgeführt, der entsprechend von einem Computerprogramm angesteuert wird.

Bei einem Stromausfall oder einer Fehlfunktion des Robotergelenks, aber auch wenn der Roboter außer Betrieb genommen wird, beispielsweise durch eine Funktion um Energie zu sparen, muss das Robotergelenk sicher in seiner jeweiligen Position gehalten werden. Dazu ist ein Robotergelenkantrieb üblicherweise mit einer Feststellbremse versehen, die eine unkontrollierte Bewegung von Roboterarmen und -komponenten vermeidet. Aus der DE 3312862 A1 ist ein Robotergelenkantrieb mit einer hydraulisch betätigten Verblockungsbremse bekannt, bei der die Bauteile dieser spielfrei arbeitenden Feststellbremse in jeder Stellung unmittelbar miteinander im Eingriff stehen. Einen weiteren Robotergelenkantrieb mit einer elektromagnetischen Bremse beschreibt die US 2013/039,730 A1, wobei eine elektromagnetische Kraft die unter einer Vorspannung stehenden Bremsplatten von den mit der Antriebswelle rotierenden Bremsflächen abhält. Beim Ausfall der Stromversorgung werden die Bremsplatten über die Vorspannkraft an die mitdrehenden Bremsflächen gedrückt und halten das Robotergelenk in der jeweiligen Position.

Ein gattungsgemäßer Robotergelenkantrieb ist aus der WO 2015/185 748 A1 bekannt, wobei ein schwenkbarer Bremsarm mit mehreren Bremskissen mittels einer Vorspannung gegen die Außenfläche eines mit der Motorwelle verbundenen Glockenteils drückt, sobald ein lineares Stellglied nicht elektrisch angeregt wird.

JP2003011079 und JP2007006590 offenbaren ebenfalls gattungsgemäße Robotergelenkantriebe.

Mit der fortschreitenden technischen Entwicklung im Bereich der industriellen Automatisierung und der Robotertechnik steigen auch die Anforderungen an die hierbei eingesetzten Robotergelenkantriebe. Neben der sicheren Funktion und dem störungsfreien Betrieb von Robotergelenkantrieben ergibt sich im Rahmen der Weiterentwicklung auch die Anforderung, bestehende Konzepte zu vereinfachen, die Funktionsweise vom Gelenkantrieb und der zugehörigen Feststellbremse zu verbessern, um die Kosten für die Herstellung zu reduzieren.
Es ist daher die Aufgabe der vorliegenden Erfindung, einen eingangs genannten Robotergelenkantrieb mit einem möglichst konstruktiv einfachen Aufbau, einer sicheren Funktionsweise und einer kostengünstigen Herstellung bereitzustellen.
Diese Aufgabe wird mit einem gattungsgemäßen Robotergelenkantrieb erfindungsgemäß dadurch gelöst, dass die Feststellbremse weiter einen zweiten Hebelarm aufweist, wobei der erste Hebelarm und der zweite Hebelarm auf einander gegenüberliegenden Seiten des Elektroantriebsmotors schwenkbar angeordnet und von einer Vorspanneinrichtung in Richtung des Elektroantriebsmotors vorgespannt sind. Das Vorsehen von zwei Hebelarmen auf einander gegenüberliegenden Seiten des Antriebsmotors verhindert bei einer Aktivierung der Feststellbremse eine einseitige Belastung des Elektroantriebsmotors, wodurch nicht nur die Gefahr eines unabsichtigen Durchrutschens des Antriebsmotors reduziert, sondern auch die auf die beiden Hebelarme wirkende Vorspannkraft verringert werden kann. Durch den einfachen Aufbau und die beidseitige Anordnung der Hebelarme um den Elektroantriebsmotor herum kann die Feststellbremse platzsparend direkt im stationären Gehäuse des Robotergelenkantriebs oder einem Gehäusedeckel angeordnet, sowie konstruktiv integriert sein. Um eine möglichst direkte Wirkung der beiden Hebelarme der Feststellbremse auf den Elektroantriebsmotor zu ermöglichen, kann dieser Antriebsmotor bevorzugt ein Außenläufer sein. Alternativ kann auch ein innenliegender Rotor mit einer an der Rotorwelle angreifenden Glocke versehen sein, die den Stator des Motors umgibt und die Bremswirkung der beiden Hebelarme auf den Rotor überträgt. Neben der von dem Elektroantriebsmotor angetriebenen Welle kann das relativ zum stationären Gehäuse drehbare Abtriebsteil des Robotergelenkantriebs auch daran befestigte Roboterbauteile umfassen.
Für eine möglichst einfache Konstruktion des Robotergelenkantriebs kann die Vorspanneinrichtung ein einzelnes Federelement, bevorzugt eine Schraubenfeder sein. Um eine direkte Wirkung des Federelements auf die beiden Hebelarme zu ermöglichen, kann das Federelement zwischen dem ersten Hebelarm und dem zweiten Hebelarm angeordnet sein, wobei ein Ende des Federelements am ersten Hebelarm und ein zweites Ende des Federelements am zweiten Hebelarm befestigt ist. Mit einer solchen freien, bzw. schwimmenden Vorspannung kann darüber hinaus verhindert werden, dass auf die beiden Hebelarme ungleiche Vorspannkräfte einwirken.

Eine bevorzugte Ausführungsform des erfindungsgemäßen Robotergelenkantriebs sieht vor, dass der Aktuator zum Ablösen der Hebelarme von dem Elektroantriebsmotor gleichzeitig auf den ersten Hebelarm und den zweiten Hebelarm wirkt, bevorzugt synchron auf den ersten Hebelarm und den zweiten Hebelarm wirkt. Die gleichzeitige Wirkung des Aktuators auf den ersten und zweiten Hebelarm vermeidet den Einsatz von weiteren zusätzlichen Aktuatoren. Darüber hinaus werden bei einer synchronen Einwirkung des Aktuators zum Ablösen der Hebelarme von dem Elektroantriebsmotor zusätzliche Übertragungsmechaniken vermieden und so bei einer Spannungsunterbrechung ein zeitverzögertes, ungleichmäßiges Anrücken der Hebelarme an den Elektroantriebsmotor verhindert.

Zweckmäßigerweise kann der Aktuator zum Ablösen der Hebelarme ein rotativer Elektromotor sein. Im Gegensatz zu den herkömmlichen linearen Antrieben ist ein rotativer Elektromotor ein betriebssicherer Aktuator, der konstruktiv einfach in einen Robotergelenkantrieb integriert werden kann. Dabei ist die Nutzung eines bürstenbehafteten Gleichstrommotors als rotativer Aktuator eine kostengünstige Variante, die problemlos in den Aufbau eines Robotergelenkantriebs eingepasst werden kann.

Eine sinnvolle Ausgestaltung sieht vor, dass der Aktuator ein ovales Nockenelement oder eine Kurvenscheibe aufweist, um die beiden Hebelarme von dem Elektroantriebsmotor abzulösen. Ein ovales Nockenelement mit zwei um 180° versetzt angeordneten Nocken kann bei einer Anordnung zwischen den freien Enden der beiden Hebelarme ein sicheres und gleichmäßiges Abheben der beiden Hebelarme vom Elektroantriebsmotor realisieren. Das ovale Nockenelement ermöglicht weiter eine direkte Anbindung eines rotativen Aktuators und vereinfacht dadurch den konstruktiven Aufbau eines Robotergelenkantriebs. Desweiteren kann das ovale Nockenelement über ein Stirnradgetriebe angetrieben sein, wodurch ein höheres Drehmoment am Nockenelement erzeugt oder alternativ ein schwächerer, kleiner dimensionierter Elektromotor verwendet werden kann.

Eine weitere Ausbildung sieht vor, dass der Aktuator ein Zahnrad aufweist, wobei das Zahnrad auf zwei Zahnstangenelemente an den Hebelarmen einwirkt, um die Hebelarme von dem Elektroantriebsmotor abzulösen. Die Verwendung von Zahnstangenelementen an den Hebelarmen, die mit dem von einem rotativen Aktuator angetriebenen Zahnrad zusammenwirken, ermöglichen eine definierte, auf beiden Seiten des Elektroantriebsmotors gleichmäßige Bewegung der Hebelarme zum Ablösen von dem Elektroantriebsmotor. Bei einer entsprechend langen Ausgestaltung der Zahnstangenelemente an den Hebelarmen ergibt sich ein relativ großer Schwenkbereich, der auch bei schwenklagernahen Bremsabschnitten der Hebelarme ein sicheres Ablösen vom Elektroantriebsmotor gewährleistet.

Eine besondere Ausgestaltung sieht vor, dass der erste Hebelarm und der zweite Hebelarm schwenkbar auf einer gemeinsamen Schwenklagerachse angeordnet sind. Die Anordnung der beiden Hebelarme auf einer einzelnen Schwenklagerachse reduziert die notwendigen Konstruktionselemente und vereinfacht somit den Aufbau eines erfindungsgemäßen Robotergelenkantriebs.

Eine Variante des erfindungsgemäßen Robotergelenkantriebs sieht vor, dass der erste Hebelarm und der zweite Hebelarm baugleich ausgebildet sind, und/oder bevorzugt als Kunststoff-Spritzgussteile hergestellt sind. Durch die baugleiche Ausbildung der beiden Hebelarme lassen sich nicht nur Werkzeugkosten einsparen, sondern auch die Produktionskosten durch höhere Stückzahlen reduzieren. Die Herstellung der beiden Hebelarme als Kunststoff-Spritzgussteile bietet neben einer günstigen Produktion auch die Herstellung von masshaltigen Bauteilen und die Vorteile einer Massenfertigung der Hebelarme, insbesondere bei der Verwendung einer Spritzgießform für beide Hebelarme. Bevorzugt können die Hebelarme auch mittels eines Zwei-Komponenten-Spritzguss-Verfahrens hergestellt werden, wobei das Material auf der am Elektroantriebsmotor anliegenden Innenseite eine höhere Elastizität bzw. eine geringere Härte aufweisen kann als der Rest des Hebelarms, beispielsweise durch die Verwendung eines thermoplastischen Elastomers. Alternativ kann auf der Innenseite der Hebelarme ein elastisches oder gummiartiges Material angebracht oder als Beschichtung aufgetragen sein.

Desweiteren bezieht sich die Erfindung auf einen Roboter, insbesondere auf einen Humanoid-Roboter, mit mindestens einem derartigen Robotergelenkantrieb bei dem die Feststellbremse zwei auf einander gegenüberliegenden Seiten des Elektroantriebsmotors angeordnete Hebelarme aufweist, die in Richtung des Elektroantriebsmotors vorgespannt sind.

Im Folgenden werden Ausführungsbeispiele der vorliegenden Erfindung anhang von Zeichnungen näher erläutert. Es zeigt:
- Fig. 1: eine perspektivische Draufsicht auf einen erfindungsgemäßen Robotergelenkantrieb,
- Fig. 2: eine perspektivische Rückseitenansicht auf den Robotergelenkantrieb aus Fig. 1,
- Fig. 3: eine Draufsicht auf die Rückseite des Robotergelenkantrieb aus Fig. 2 ohne Gehäusedeckel,
- Fig. 4a: eine Draufsicht auf die Feststellbremse des Robotergelenkantriebs in aktiviertem Zustand,
- Fig. 4b: eine Draufsicht auf die Feststellbremse des Robotergelenkantriebs in einer gelösten Stellung,
- Fig. 5a: eine Draufsicht auf die ausgelenkten Hebelarme der Feststellbremse mit einem Stirnrad betriebenen Nockenelement, und
- Fig. 5b: eine Draufsicht auf die ausgelenkten Hebelarme der Feststellbremse mit einem Zahnradantrieb und Zahnsteinelementen auf den Hebelarmen.

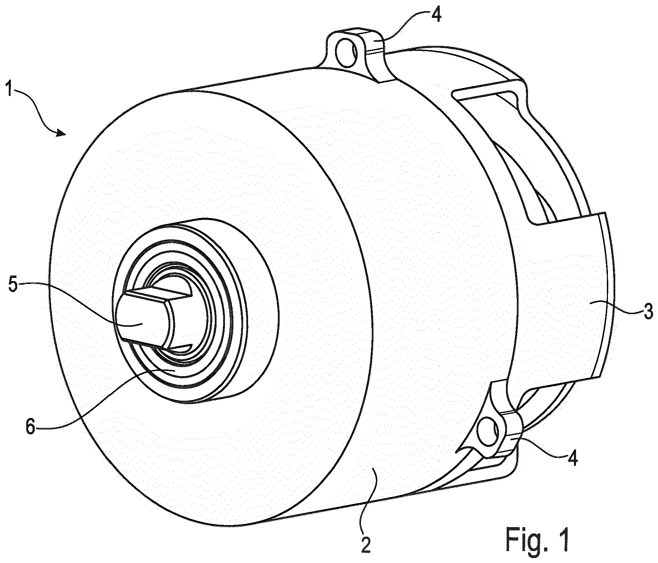

In Fig. 1 ist ein erfindungsgemäßer Robotergelenkantrieb 1 für die Verwendung in automatisierten Fertigungen oder Humanoid-Robotern dargestellt. Der Robotergelenkantrieb 1 umfasst ein stationäres Gehäuse 2, das an der Rückseite mit einem Gehäusedeckel 3 abgeschlossen ist, wobei am Übergang zwischen stationärem Gehäuse 2 und Gehäusedeckel 3 am stationären Gehäuse 3 mehrere Befestigungslaschen 4 vorgesehen sind. Anstelle der Befestigungslaschen kann hier alternativ auch ein Bajonettverschluss vorgesehen sein. An der Stirnseite des stationären Gehäuses 2 tritt eine Abtriebswelle 5 aus, die gegenüber dem stationären Gehäuse 2 drehbar in einem Lager 6 gelagert ist. Dabei sitzt das Lager 6 in einem stirnseitigen Vorsprung des stationären Gehäuses 2. Die Abtriebswelle 5 ist seitlich abgeflacht, um weitere Bauteile der angetriebenen Gelenkseite zu befestigen.

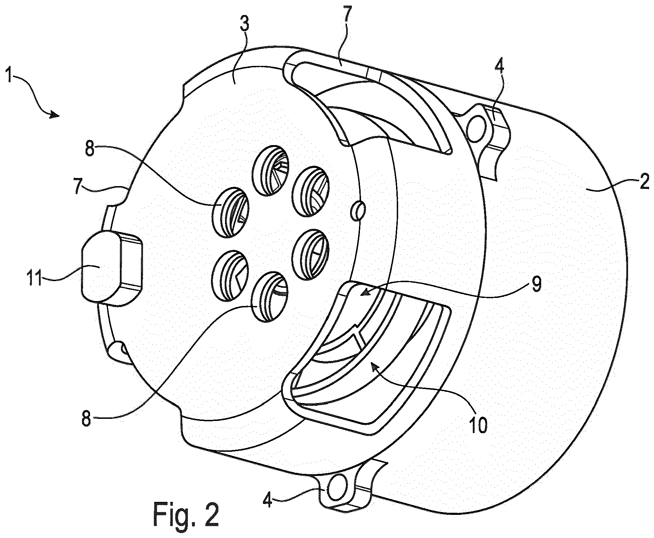

Die Rückseite des erfindungsgemäßen Robotergelenkantriebs 1 wird in Fig. 2 in einer perspektivischen Darstellung gezeigt. Der Gehäusedeckel 3 weist vier seitliche Ausschnitte 7 und sechs stirnseitige, ringförmig angeordnete Bohrungen 8 zur Belüftung des von dem Gehäusedeckel 3 abgedeckten Elektroantriebsmotors 9 auf. Dabei kann der Elektroantriebsmotor 9 die aus der Stirnseite des stationären Gehäuses 2 austretende Abtriebswelle 5 direkt oder über ein geeignetes Getriebe im stationären Gehäuse 2, beispielsweise ein Stirnradgetriebe, antreiben. Durch den seitlichen Ausschnitt 7 ist ein Teil der Feststellbremse 10 zu erkennen. Auf der Oberseite des Gehäusedeckels 3 ist seitlich ein Aktuator 11 zum Deaktivieren der Feststellbremse 10 angeordnet.

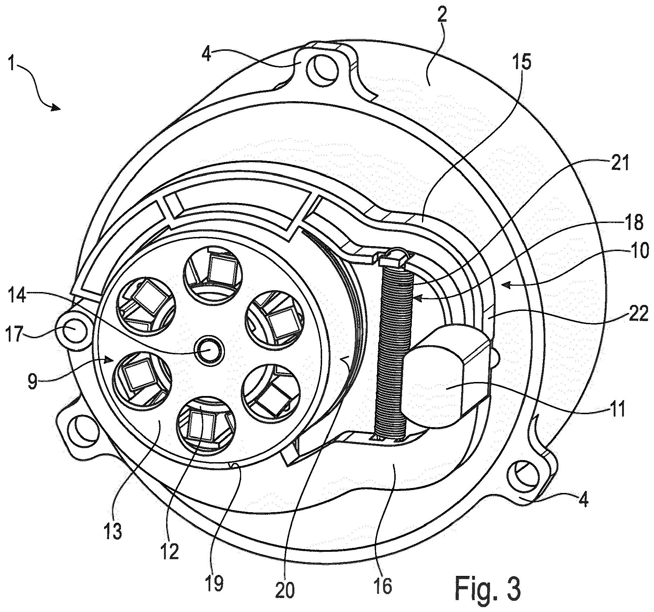

Fig. 3 zeigt eine perspektivische Ansicht der Rückseite des Robotergelenkantriebs 1 ohne Gehäusedeckel 3. Der Elektroantriebsmotor 9 ist wie in Fig. 3 zu erkennen als Außenläufermotor ausgebildet, bei dem sich der Stator 12 im Inneren des Motors befindet und von dem Rotor 13 umschlossen ist. Der Rotor 13 ist dabei drehbar auf der Motorwelle 14 gelagert und glockenförmig ausgebildet. Die Feststellbremse 10 zur Fixierung des Elektroantriebsmotors 9 bei einem unbeabsichtigten Stromausfall, einer Fehlfunktion des Robotergelenks oder bei Ausführung einer Stromsparfunktion, umfasst einen ersten Hebelarm 15 und einen zweiten Hebelarm 16, die gemeinsam auf einer Schwenklagerachse 17 schwenkbar gelagert sind. Dabei sind der erste Hebelarm 15 und der zweite Hebelarm 16 über eine Vorspanneinrichtung 18 in Richtung des Elektroantriebsmotors 9 vorgespannt. Die beiden Hebelarme 15,16 besitzen auf der zum Elektroantriebsmotor 9 hinweisenden Innenseite Bremsflächen 19, die im aktivierten Zustand der Feststellbremse 10 durch die Vorspanneinrichtung 18 gegen die Außenumfangsfläche 20 des glockenförmigen Rotors 13 gedrückt werden. Die Vorspanneinrichtung 18 ist hier als Schraubenfeder 21 ausgebildet, deren Enden in entsprechende Aussparungen an den Hebelarmen 15,16 eingreifen und dort gesichert sind. Die Schraubenfeder 21 ist räumlich zwischen dem Elektroantriebsmotor 9 und dem Aktuator 11 angeordnet und spannt die Hebelarme 15,16 in Richtung des Elektroantriebsmotors 9 vor. Der Aktuator 11 wirkt bei ununterbrochener Stromversorgung des Elektroantriebsmotors 9 auf die freien Hebelarmenden 22 des ersten Hebelarms 15 und zweiten Hebelarms 16, um die Hebelarme 15,16 entgegen der Vorspannung der Vorspanneinrichtung 18 nach außen zu drücken und so die Bremsflächen 19 der Hebelarme 15,16 von der Umfangsfläche 20 des Rotors 13 zu lösen.

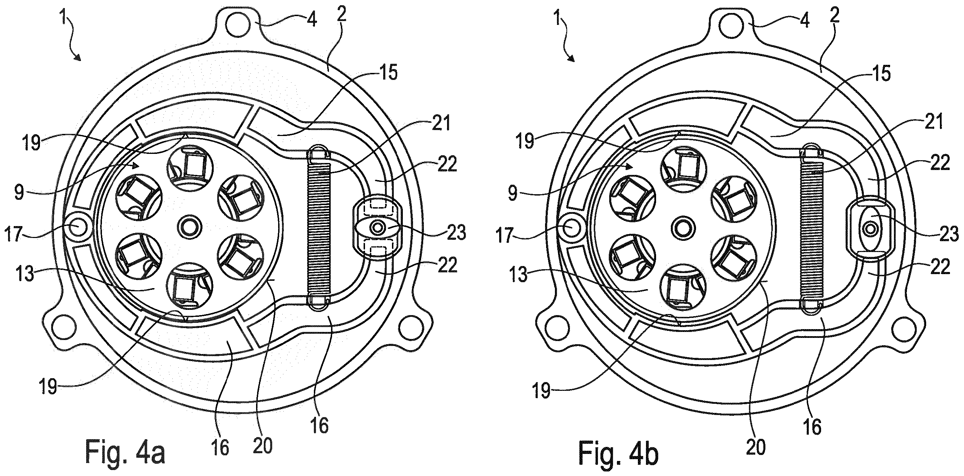

Die Wirkungsweise der Feststellbremse 10 eines erfindungsgemäßen Robotergelenkantriebs 1 wird im Folgenden anhand der Fig. 4a und 4b erläutert. Fig. 4a ist eine Draufsicht auf die Rückseite des Robotergelenkantriebs 1 ohne Gehäusedeckel 3 in einem stromlosen Zustand. Im stromlosen Zustand werden die Hebelarme 15,16 durch die Vorspannkraft der Schraubenfeder 21 in Richtung des Elektroantriebsmotors gezogen, sodass die Bremsflächen 19 der Hebelarme 15,16 gegen die Umfangsfläche 20 des Rotors 13 drücken und diesen in seiner Position fixieren. Dadurch wird bei einem Stromausfall das an der Abtriebswelle 5 anschließende Bauteil des Roboters in seiner Position fixiert. Im stromlosen Zustand liegen die abgeflachten Seiten des von dem Aktuator 11 angetriebenen ovalen Nockenelements 23 an den freien Hebelarmenden 22 des ersten Hebelarms 15 und des zweiten Hebelarms 16 an oder das Nockenelement 23 wird von der Vorspannkraft der Vorspanneinrichtung 18 in diese Position gedrückt.

Fig. 4b zeigt die Feststellbremse 10 des Robotergelenkantriebs 1 in einer gelösten Position, in der die Bremsflächen 19 der Hebelarme 15,16 einen Spalt zu der Umfangsfläche 20 des Rotors 13 aufweisen und entsprechend nicht daran anliegen, sodass der Rotor 13 sich frei bewegen kann. In dieser aktiven Betriebsposition mit ununterbrochener Spannungsversorgung wird das Nockenelement 23 durch den Aktuator 11 gegen die Vorspannkraft der Schraubenfeder 21 gedreht, sodass die Spitzen des Nockenelements 23 die freien Hebelarmenden 22 nach außen drücken. Dadurch schwenken die Hebelarme 15,16 um die Schwenkachse 17 nach außen und die Bremsflächen 19 heben von der Umfangsfläche 20 des Rotors ab. Wie in Fig. 4b gut zu erkennen, erstrecken sich die Bremsflächen 19 am ersten Hebelarm 15 und zweiten Hebelarm 16 nur entlang eines kleinen Bereichs von etwa 45°-60° der Umfangsfläche 20 des Rotors 13 und wirken jeweils auf gegenüberliegenden Seiten auf den Rotor 13. Dadurch wird zum Einen verhindert, dass sich die Hebelarme 15,16 auch bei einem nur geringeren Aktivierungshub durch das Nockenelement 23 nicht mit der Umfangsfläche 20 in Kontakt stehen und so keinen Widerstand für den Elektroantriebsmotor 9 erzeugen. Zum Anderen lassen sich die Bremsflächen 19 dadurch so auf gegenüberliegenden Seiten der Motorwelle 14 anordnen, dass die Bremskraft der Feststellbremse 10 gleichmäßig auf den Rotor 13 einwirkt.

Der in den Fig. 4a und 4b nur als Umriss dargestellte Aktuator 11 ist bevorzugt ein bürstenbehafteter Gleichstrommotor, der unter Spannung das Nockenelement 23 in seiner aktivierten Position hält.

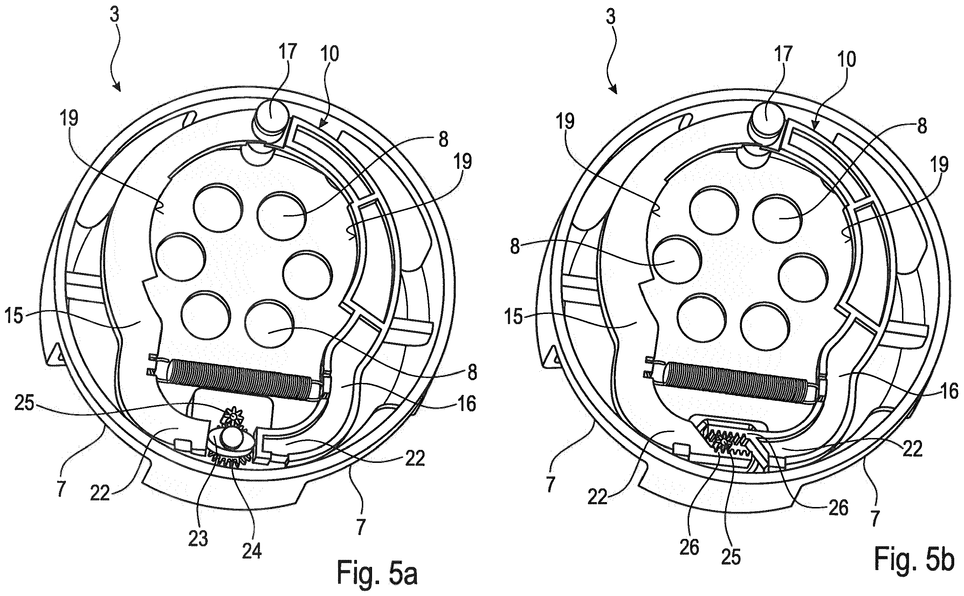

In Fig. 5a ist die Innenseite des Gehäusedeckels 3 mit den am Gehäusedeckel 3 montierten Bauteilen der Feststellbremse 10 zu sehen. Die Hebelarme 15,16 der Feststellbremse 10 sind schwenkbar auf der Schwenklagerachse 17 angeordnet, die fest mit dem Gehäusedeckel 3 verbunden ist. An dem Gehäusedeckel 3 sind die vier am Umfang verteilten Ausschnitte 7 sowie die sechs Bohrungen 8 an der Stirnseite des Gehäusedeckels 3 zur Belüftung des am stationären Gehäuse 2 befestigten Elektroantriebsmotors 9 zu erkennen. Zwischen dem ersten Hebelarm 15 und zweiten Hebelarm 16 ist die Schraubenfeder 21 angeordnet, die in entsprechenden Aussparungen an den Hebelarmen 15,16 befestigt ist und die Hebelarme 15,16 gegeneinander vorspannt. Die Hebelarme 15,16 werden in der in Fig. 5a gezeigten Darstellung von dem ovalen Nockenelement 23 in eine gelöste, bzw. geöffnete Position gedrückt. Dabei werden die Stirnseiten der freien Hebelarmenden 22 der Hebelarme 15,16 durch die vorstehenden Nocken des Nockenelements 23 gegen die Vorspannung der Schraubenfeder 21 nach außen gedrückt. Das Nockenelement 23 ist dabei fest mit einem großen Zahnrad 24 mit vielen Zähnen verbunden, das von einem kleinen Zahnrad 25 mit wenigen Zähnen vom Aktuator 11 angetrieben wird.

Fig. 5b zeigt eine weitere Ausführungsform der Feststellbremse 10, wobei der Aktuator 11 über ein kleines Zahnrad 25 auf zwei an den freien Hebelarmenden 22 des ersten Hebelarms 15 und zweiten Hebelarms 16 ausgebildeten Zahnstangenelemente 26 eingreift, um die Hebelarme 15,16 gegen die Vorspannkraft der Schraubenfeder 21 nach außen zu drücken.

Wie an den Ausführungsformen der Feststellbremse 10 in den Fig. 5a und 5b gut zu erkennen, können die Hebelarme 15,16 als Spritzgussteile aus Kunststoff hergestellt werden, die an den Rändern und durch mittige Streben verstärkt sind. Dabei können die Bremsflächen 19, die, wie in den Fig. 5a und 5b gut zu erkennen, gegenüber den anderen nach innen weisenden Flächen der Hebelarme 15,16 etwas vorstehen, in einem Zwei-Komponenten-Spritzguss aus einem Material, beispielsweise einem thermoplastischen Elastomer, mit einer höheren Elastizität bzw. einer geringeren Härte hergestellt sein. Alternativ können die Bremsflächen 19 auch mit einem elastischen oder gummiartigen Material beschichtet sein, um die Bremswirkung zwischen den Bremsflächen 19 und der Umfangsfläche 20 des Rotors 13 zu verbessern. Wir in Fig. 5a dargestellt, können der erste Hebelarm 15 und der zweite Hebelarm 16 identische Bauteile sein, die im gleichen Spritzguss-Werkzeug hergestellt werden, nur lediglich mit unterschiedlichen Oberseiten auf der Schwenkachse 17 montiert werden.

### Bezugszeichenliste

- 1: Robotergelenkantrieb
- 2: stationäres Gehäuse
- 3: Gehäusedeckel
- 4: Befestigungslaschen
- 5: Abtriebswelle
- 6: Lager
- 7: Ausschnitte
- 8: Bohrungen
- 9: Elektroantriebsmotor
- 10: Feststellbremse
- 11: Aktuator
- 12: Stator
- 13: Rotor
- 14: Motorwelle
- 15: erster Hebelarn
- 16: zweiter Hebelarm
- 17: Schwenklagerachse
- 18: Vorspanneinrichtung
- 19: Bremsflächen
- 20: Umfangsfläche
- 21: Schraubenfeder
- 22: freie Hebelarmenden
- 23: Nockenelement
- 24: großes Zahnrad
- 25: kleines Zahnrad
- 26: Zahnstangenelemente

## Patentansprüche

1. Robotergelenkantrieb (1) mit einem stationären Gehäuse (2), einem relativ zum stationären Gehäuse (2) drehbaren Abtriebsteil (5), einem Elektroantriebsmotor (9) zum Bewegen des Abtriebsteils (5) und einer Feststellbremse (10) für den Rotor (13) des Elektroantriebsmotors (9), wobei die Feststellbremse (10) einen den Elektroantriebsmotor (9) bereichsweise umgreifenden Hebelarm (15), eine Vorspanneinrichtung (18) zum Vorspannen des Hebelarms (15) in Richtung des Elektroantriebsmotors (9) und einen Aktuator (11) zum Ablösen des Hebelarms (15) von dem Elektroantriebsmotor (9) umfasst, wobei die Feststellbremse (10) weiter einen zweiten Hebelarm (16) aufweist, wobei der erste Hebelarm (15) und der zweite Hebelarm (16) auf einander gegenüberliegenden Seiten des Elektroantriebsmotors (9) schwenkbar angeordnet und von der Vorspanneinrichtung (18) in Richtung des Elektroantriebsmotors (9) vorgespannt sind.

2. Robotergelenkantrieb (1) nach Anspruch 1,
**dadurch gekennzeichnet, dass** die Vorspanneinrichtung (18) ein Federelement, bevorzugt eine Schraubenfeder (21), ist.

3. Robotergelenkantrieb (1) nach Anspruch 2,
**dadurch gekennzeichnet, dass** das Federelement zwischen dem ersten Hebelarm (15) und dem zweiten Hebelarm (16) angeordnet ist, wobei ein Ende des Federelements am ersten Hebelarm (15) und ein zweites Endes des Federelements am zweiten Hebelarm (16) befestigt ist.

4. Robotergelenkantrieb (1) nach einem der Ansprüche 1 bis 3,
**dadurch gekennzeichnet, dass** der Aktuator (11) zum Ablösen der Hebelarme (15,16) von dem Elektroantriebsmotor (9) gleichzeitig auf den ersten Hebelarm (15) und den zweiten Hebelarm (16) wirkt, bevorzugt synchron auf den ersten Hebelarm (15) und den zweiten Hebelarm (16) wirkt.

5. Robotergelenkantrieb (1) nach einem der Ansprüche 1 bis 4,
**dadurch gekennzeichnet, dass** der Aktuator (1) zum Ablösen der Hebelarme (15,16) ein rotativer Elektromotor ist, bevorzugt ein bürstenbehafteter Gleichstrommotor ist.

6. Robotergelenkantrieb (1) nach einem der Ansprüche 1 bis 5,
**dadurch gekennzeichnet, dass** der Aktuator (11) ein ovales Nockenelement (23) aufweist, um die Hebelarme (15,16) von dem Elektroantriebsmotor (9) abzulösen.

7. Robotergelenkantrieb (1) nach Anspruch 6, **dadurch gekennzeichnet, dass** das ovale Nockenelement (23) über ein Stirnradgetriebe angetrieben ist.

8. Robotergelenkantrieb (1) nach einem der Ansprüche 1 bis 5,
**dadurch gekennzeichnet, dass** der Aktuator (11) ein Zahnrad (25) aufweist, wobei das Zahnrad (25) auf zwei Zahnstangenelemente (26) an den Hebelarmen (15,16) einwirkt, um die Hebelarme (15,16) von dem Elektromotor (9) abzulösen.

9. Robotergelenkantrieb (1) nach einem der Ansprüche 1 bis 8,
**dadurch gekennzeichnet, dass** der erste Hebelarm (15) und der zweite Hebelarm (16) auf einer gemeinsamen Schwenklagerachse (17) angeordnet sind.

10. Robotergelenkantrieb (1) nach einem der Ansprüche 1 bis 9,
**dadurch gekennzeichnet, dass** der erste Hebelarm (15) und der zweite Hebelarm (16) baugleich ausgebildet sind, und/oder als Kunststoffspritzgussteile hergestellt sind.

11. Roboter, insbesondere ein Humanoid-Roboter, mit mindestens einem Robotergelenkantrieb (1) nach einem der Ansprüche 1 bis 10, wobei die Feststellbremse (10) für den Rotor (13) des Elektroantriebsmotors (9) einen ersten Hebelarm (15) und zweiten Hebelarm (16) aufweist, die auf einander gegenüberliegenden Seiten des Elektroantriebsmotors (9) schwenkbar angeordnet und von der Vorspanneinrichtung (18) in Richtung des Elektroantriebsmotors (9) vorgespannt sind.

## Claims

1. A robot joint drive (1) comprising a stationary housing (2), a driven part (5) rotatable relative to the stationary housing (2), an electric drive motor (9) for moving the driven part (5) and a parking brake (10) for the rotor (13) of the electric drive motor (9), the parking brake (10) comprising a lever arm (15) surrounding the electric drive motor (9) in regions, biasing means (18) for biasing the lever arm (15) in the direction of the electric drive motor (9) and an actuator (11) for detaching the lever arm (15) from the electric drive motor (9),
wherein the parking brake (10) further comprises a second lever arm (16), the first lever arm (15) and the second lever arm (16) being pivotably arranged on opposite sides of the electric drive motor (9) and biased by the biasing means (18) in the direction of the electric drive motor (9).

2. The robot joint drive (1) according to claim 1,
**characterized in that** the biasing means (18) is a spring element, preferably a coil spring (21).

3. The robot joint drive (1) according to claim 2,
**characterized in that** the spring element is arranged between the first lever arm (15) and the second lever arm (16), one end of the spring element being secured to the first lever arm (15) and a second end of the spring element being secured to the second lever arm (16).

4. The robot joint drive (1) according to any of claims 1 to 3,
**characterized in that** the actuator (11) acts simultaneously on the first lever arm (15) and the second lever arm (16), preferably synchronously on the first lever arm (15) and the second lever arm (16), for detaching the lever arms (15, 16) from the electric drive motor (9).

5. The robot joint drive (1) according to any of claims 1 to 4,
**characterized in that** the actuator (1) for detaching the lever arms (15, 16) is a rotary electric motor, preferably a brushed DC motor.

6. The robot joint drive (1) according to any of claims 1 to 5,
**characterized in that** the actuator (11) comprises an oval cam element (23) to detach the lever arms (15, 16) from the electric drive motor (9).

7. The robot joint drive (1) according to claim 6,
**characterized in that** the oval cam element (23) is driven via a spur gear.

8. The robot joint drive (1) according to any of claims 1 to 5,
**characterized in that** the actuator (11) has a gear (25), the gear (25) acting on two rack elements (26) on the lever arms (15, 16) to detach the lever arms (15, 16) from the electric motor (9).

9. The robot joint drive (1) according to any of claims 1 to 8,
**characterized in that** the first lever arm (15) and the second lever arm (16) are arranged on a common pivot bearing axis (17).

10. The robot joint drive (1) according to any of claims 1 to 9,
**characterized in that** the first lever arm (15) and the second lever arm (16) are of identical construction, and/or are produced as plastic injection molded parts.

11. A robot, in particular a humanoid robot, having at least one robot joint drive (1) according to any of claims 1 to 10, wherein the parking brake (10) for the rotor (13) of the electric drive motor (9) comprises a first lever arm (15) and a second lever arm (16) which are arranged pivotably on opposite sides of the electric drive motor (9) and are biased by the biasing means (18) in the direction of the electric drive motor (9).

## Revendications

1. Entraînement d'articulation de robot (1) comprenant un carter (2) stationnaire, une pièce de sortie d'entraînement (5) susceptible de tourner par rapport au carter (2) stationnaire, un moteur électrique d'entraînement (9) pour produire le mouvement de l'arbre de sortie d'entraînement (5), et un frein d'immobilisation (10) pour le rotor (13) du moteur électrique d'entraînement (9), entraînement d'articulation de robot
dans lequel le frein d'immobilisation (10) comprend un bras de levier (15) entourant en partie le moteur électrique d'entraînement (9), un dispositif de précontrainte (18) pour assurer une précontrainte du bras de levier (15) en direction du moteur électrique d'entraînement (9), et un actionneur (11) destiné à dégager le bras de levier (15) du moteur électrique d'entraînement (9),
et dans lequel le frein d'immobilisation (10) comprend, par ailleurs, un deuxième bras de levier (16), le premier bras de levier (15) et le deuxième bras de levier (16) étant agencés de manière pivotante sur des côtés mutuellement opposés du moteur électrique d'entraînement (9), et étant précontraints en direction du moteur électrique d'entraînement (9) par le dispositif de précontrainte (18).

2. Entraînement d'articulation de robot (1) selon la revendication 1,
**caractérisé en ce que** le dispositif de précontrainte (18) est un élément de ressort, de préférence un ressort hélicoïdal (21).

3. Entraînement d'articulation de robot (1) selon la revendication 2,
**caractérisé en ce que** l'élément de ressort est agencé entre le premier bras de levier (15) et le deuxième bras de levier (16), une extrémité de l'élément de ressort étant fixée au premier bras de levier (15), et une deuxième extrémité de l'élément de ressort étant fixée au deuxième bras de levier (16).

4. Entraînement d'articulation de robot (1) selon l'une des revendications 1 à 3,
**caractérisé en ce que** l'actionneur (11) pour dégager les bras de levier (15, 16) du moteur électrique d'entraînement (9), agit simultanément sur le premier bras de levier (15) et le deuxième bras de levier (16), de préférence de manière synchrone sur le premier bras de levier (15) et le deuxième bras de levier (16).

5. Entraînement d'articulation de robot (1) selon l'une des revendications 1 à 4,
**caractérisé en ce que** l'actionneur (1) pour dégager les bras de levier (15, 16), est un moteur électrique rotatif, de préférence un moteur à courant continu à balais.

6. Entraînement d'articulation de robot (1) selon l'une des revendications 1 à 5,
**caractérisé en ce que** l'actionneur (11) comprend un élément de came (23) de forme ovale, pour dégager les bras de levier (15, 16) du moteur électrique d'entraînement (9).

7. Entraînement d'articulation de robot (1) selon la revendication 6,
**caractérisé en ce que** l'élément de came (23) de forme ovale est entraîné par l'intermédiaire d'une transmission à roues dentées droites.

8. Entraînement d'articulation de robot (1) selon l'une des revendications 1 à 5,
**caractérisé en ce que** l'actionneur (11) comporte une roue dentée (25), la roue dentée (25) agissant sur deux éléments de crémaillère (26) sur les bras de levier (15, 16), pour dégager les bras de levier (15, 16) du moteur électrique (9).

9. Entraînement d'articulation de robot (1) selon l'une des revendications 1 à 8,
**caractérisé en ce que** le premier bras de levier (15) et le deuxième bras de levier (16) sont agencés sur un axe de palier de pivotement (17) commun.

10. Entraînement d'articulation de robot (1) selon l'une des revendications 1 à 5,
**caractérisé en ce que** le premier bras de levier (15) et le deuxième bras de levier (16) sont d'une construction identique, et/ou sont fabriqués en tant que pièces de matière plastique, moulées par injection.

11. Robot, notamment robot humanoïde, comprenant au moins un entraînement d'articulation de robot (1) selon l'une des revendications 1 à 10, le frein d'immobilisation (10) pour le rotor (13) du moteur électrique d'entraînement (9) comprenant un premier bras de levier (15) et un deuxième bras de levier (16), qui sont agencés de manière pivotante sur des côtés mutuellement opposés du moteur électrique d'entraînement (9), et sont précontraints en direction du moteur électrique d'entraînement (9) par le dispositif de précontrainte (18).
